# EUROPEAN PATENT APPLICATION

(11) **EP 4 701 247 A1**
(43) Date of publication of application: **25.02.2026**
(21) Application number: 24932112.6
(22) Date of filing: 08.11.2024
(51) Int. Cl.: H04W 8/00

(54) **METHOD FOR AUTOMATIC SWITCHING BETWEEN MESH PUSH-TO-TALK AND 5G DATA NETWORK PUSH-TO-TALK**

(71) Applicant: Shenzhen Ejeas Intelligent Technology Co., Ltd., Shenzhen, Guangdong 518000 (CN)
(72) Inventor: PENG, Lingli, Shenzhen, Guangdong 518000 (CN); WU, Cheng, Shenzhen, Guangdong 518000 (CN)
(74) Representative: Lin Chien, Mon-Yin
(86) International application number: PCT/CN2024/130768
(87) International publication number: WO 2025/200470

(57) **Abstract**

This application relates to an automatic switching method between Mesh intercom and 5G data network intercom, including: creating Mesh networks by Bluetooth devices for Mesh networking; designating one node as a master node, and creating an online group on an APP through the master node; all Bluetooth devices communicating with the APP by a bidirectional dynamic heartbeat data mode, synchronizing information through the virtual networking formed by mapped nodes at the cloud; voice data between online nodes being communicated by a Mesh mode; when a Bluetooth device's node goes offline or reconnects, the node device automatically switching to a data network mode via the APP, enabling network communication through the cloud using data network mode. This automatic switching method between Mesh intercom and 5G data network intercom ensures normal voice data transmission and reception for disconnected nodes by automatically switching to cloud-based network transmission when devices/nodes go offline, thereby maintaining the real-time and coherent integrity of voice data transmission.

## Description

### TECHNICAL FIELD

This application relates to the technical field of wireless communication, particularly to an automatic switching method for Mesh intercom and 5G data network intercom.

### BACKGROUND

**In** related technologies, Bluetooth intercom technology is widely used in various fields, such as security intercom, off-road vehicle communication, and small-scale communication scenarios like outdoor engineering command. Intercom devices form a voice network through the mesh mechanism to achieve real-time intercom functionality, enabling the transmission of voice data within Bluetooth signal coverage.

The advantages of Bluetooth device communication lie in its short-range wireless connection, low power consumption, easy pairing and setup, compact size, and low cost. However, its limited transmission range, relatively low data transfer rate, susceptibility to interference affecting connection stability, and compatibility issues between devices can hinder normal communication. Due to obstacles like buildings or hills in usage environments, as well as signal interference in various frequency bands, the strength and reception sensitivity of Bluetooth signals are affected by different usage scenarios, often resulting in intermittent connections that disrupt the real-time and coherent integrity of voice data transmission. In existing mesh voice networks, when a node disconnects, voice data from other nodes is lost, and communication can only be maintained within respective sub-mesh networks. The disconnected node cannot receive or send uplink/downlink voice data, affecting voice data transmission between all other nodes and the lost node, thereby degrading the user experience of Bluetooth intercom devices and failing to achieve seamless communication.

On the other hand, data network communication offers advantages such as wide coverage, high data transfer rates, support for multiple devices and services, and the ability to enable remote communication. Meanwhile, Bluetooth excels in short-range communication efficiency compared to data networks, creating a complementary scenario logic between Bluetooth Mesh networks and data networks to reduce packet loss.

### SUMMARY

To address the problems in related technologies, this application provides an automatic switching method for Mesh intercom and 5G data network intercom, combining Bluetooth data communication and data networks to effectively overcome environmental and distance barriers, reduce packet loss, and maintain the real-time and coherent integrity of voice data transmission.

This application provides an automatic switching method for Mesh intercom and 5G data network intercom, including the following steps:
S1: creating Mesh networks by Bluetooth devices for Mesh networking, marking all Bluetooth devices with a device_id and recording node information; generating a group identifier mesh_group_id, wherein Bluetooth devices in a same Mesh network share a same mesh_group_id;
S2: designating one node as a master node, and creating an online group on an APP through the master node; all Bluetooth devices joining the online group via the APP, reporting node information thereof to a cloud, and mapping nodes on the cloud to form a virtual network; all Bluetooth devices in the cloud group sharing a same network_group_id;
S3: all Bluetooth devices communicating with the APP by a bidirectional dynamic heartbeat data mode, synchronizing a status of the Bluetooth devices in real time with the virtual network formed by mapped nodes on the cloud, thereby synchronously marking a signal strength and an online status of the Bluetooth devices;
S4: for intra-network communication, a Mesh mode taking precedence over a data network mode; voice data between online nodes being prioritized for communication by the Mesh mode;
S5: if a node of the Bluetooth device' goes offline, a node device automatically switching to data network mode via the APP, enabling network communication through the cloud using the data network mode;
S6: when a node of the device going offline is detected, reporting offline node information, and uploading voice data of a current node; upon receiving the voice data of the node, the cloud processing the node and the voice data, and checking for the presence of cloud data voice; if cloud data voice exits, mixing the voice data of the node with the cloud data voice and playing the voice data, and if not, directly playing the received node voice data; and
S7: when a node of the device going offline is detected and multiple Mesh networks exist, uploading the voice data of the current node; the cloud, upon receiving the voice data of the node, processing the node and voice data, checking for the presence of cloud data voice; if cloud data voice exits, mixing the voice data of the node with the cloud data voice and playing the voice data, and if not, directly playing the received node voice data.

According to the above automatic switching method for Mesh intercom and 5G data network intercom, in S2, all Bluetooth devices in the virtual networking are within the same network_group_id, and the same Mesh nodes are assigned with the same mesh_group_id in the cloud, wherein network_group_id serves as a parent of the mesh_group_id in the cloud, and devices under the same network_group_id communicate via the cloud in the data network mode.

According to the above automatic switching method for Mesh intercom and 5G data network intercom, in S3, after the cloud receives data information, if it is detected that a device is offline from the Mesh, the cloud will send the offline device to all devices within the same network_group_id, and at this time, when any device sends voice information, the device must simultaneously transmit a Mesh voice data packet and send the Mesh voice data packet to the cloud via the APP, and the cloud then forwards the Mesh voice data packet to the offline device.

According to the above automatic switching method for Mesh intercom and 5G data network intercom, in the presence of offline nodes, if multiple nodes send voice simultaneously, the cloud mixes the voice data and distributes the mixed voice data to offline devices within the same network_group_id.

According to the above automatic switching method for Mesh intercom and 5G data network intercom, in the presence of offline nodes, all online Mesh devices simultaneously receive both Mesh device voice data and cloud voice data, and the Mesh device voice data and the cloud voice data are mixed and played by the APP.

According to the above automatic switching method for Mesh intercom and 5G data network intercom, when a Mesh node goes offline and remote heartbeat data thereof is also offline, the node is determined to be in a disengagement status.; for disengaged nodes, the cloud heartbeat data mode is used to notify other online nodes; and disengaged nodes are treated as non-existent, and the voice data is not sent to the disengaged nodes.

According to the above automatic switching method for Mesh intercom and 5G data network intercom, offline Mesh reconnection triggers automatic reconnection of cloud heartbeat data, confirming the node as online.

According to the above automatic switching method for Mesh intercom and 5G data network intercom, in S4, S41, within the same mesh_group_id network, if voice data does not comprise offline device voice, the device only plays Mesh voice data; in S42, within the same mesh_group_id network, data is transmitted between online Mesh nodes via the Mesh network; if offline devices exist, the node sending voice data also transmits the voice data via the APP; in S43, within the same network_group_id, data with different mesh_group_id is sent and received in a form of a cloud network.

According to the above automatic switching method for Mesh intercom and 5G data network intercom, the APP assigns priority levels to data nodes, where the master node has a higher priority than ordinary nodes and holds a highest operational authority over the network, allowing the master node to manage data communication for all Mesh nodes.

According to the above automatic switching method for Mesh intercom and 5G data network intercom, the master node sets whether to allow the addition of external device users; a designated device is set to a listening mode, meaning the designated device is only allowed to receive voice data but cannot send voice data.

### Beneficial effects

The technical solution provided in this application may include the following benefits: This automatic switching method for Mesh intercom and 5G data network intercom monitors device online status in real-time. When a device/node goes offline, it automatically switches to the cloud network for voice data transmission, ensuring normal transmission and reception for disconnected nodes and maintaining real-time, coherent, and complete voice data transfer. Online nodes continue using the Mesh network for voice data transmission, with the cloud network serving as a backup channel for disconnected nodes, activated as needed to ensure stability and integrity. By uploading device information and voice data to the cloud via the APP, the cloud forwards voice data for each node based on Mesh network disconnection status, guaranteeing normal transmission during disconnection and achieving uninterrupted real-time voice data transfer across all nodes.

It should be understood that the general description above and the detailed description below are merely exemplary and explanatory and do not limit this application.

### BRIEF DESCRIPTION OF DRAWINGS

By describing the exemplary embodiments of this application in more detail with reference to the accompanying drawings, the above and other objectives, features, and advantages of this application will become more apparent. In the exemplary embodiments of this application, the same reference numerals generally represent the same components.
FIG. 1 is a schematic flowchart of the automatic switching method for Mesh intercom and 5G data network intercom as illustrated in an embodiment of this application.
FIG. 2 is a schematic diagram illustrating the voice processing flow of a single node in Mesh intercom under the automatic switching method between Mesh intercom and 5G data network intercom as demonstrated in the embodiments of this application;
FIG. 3 is an application example of complete internal Mesh communication under the automatic switching method between Mesh intercom and 5G data network intercom, as demonstrated in the embodiments of this application, when all nodes in the same Mesh network are online;
FIG. 4 is an example illustrating the communication methods between devices under the automatic switching method between Mesh intercom and 5G data network intercom, as demonstrated in the embodiments of this application, when some devices in the same Mesh network are offline;
FIG. 5 is an example illustrating the communication methods between devices under the automatic switching method between Mesh intercom and 5G data network intercom, as demonstrated in the embodiments of this application, when some devices in the same Mesh network have left the group;
FIG. 6 is an example illustrating the communication methods among all devices under the automatic switching method between Mesh intercom and 5G data network intercom, as demonstrated in the embodiments of this application, when all devices in different Mesh networks are online;
FIG. 7 is an example illustrating the communication methods among all devices under the automatic switching method between Mesh intercom and 5G data network intercom, as demonstrated in the embodiments of this application, when some devices in different Mesh networks are offline;
FIG. 8 is an example illustrating the communication methods among all devices under the automatic switching method between Mesh intercom and 5G data network intercom, as demonstrated in the embodiments of this application, when some devices in different Mesh networks have left the group;
FIG. 9 is an application example of complete internal Mesh communication under the automatic switching method between Mesh intercom and 5G data network intercom, as demonstrated in the embodiments of this application, when all nodes in the same Mesh network are online.

### DESCRIPTION OF EMBODIMENTS

Preferred embodiments of this application will be described in more detail below with reference to the accompanying drawings. Although the preferred embodiments of this application are shown in the drawings, it should be understood that this application can be implemented in various forms and should not be limited by the embodiments described herein. On the contrary, these embodiments are provided to make this application more thorough and complete, and to fully convey the scope of this application to those skilled in the art.

The terms used in this application are for the purpose of describing specific embodiments only and are not intended to limit this application. The singular forms "a," "the," and "said" used in this application and the appended claims are also intended to include plural forms unless the context clearly indicates otherwise. It should also be understood that the term "and/or" as used herein refers to and encompasses any or all possible combinations of one or more associated listed items.

It should be understood that although terms such as "first," "second," and "third" may be used in this application to describe various types of information, such information should not be limited by these terms. These terms are only used to distinguish between information of the same type. For example, without departing from the scope of this application, first information may also be referred to as second information, and similarly, second information may also be referred to as first information. Thus, features defined as "first" or "second" may explicitly or implicitly include one or more such features. In the description of this application, "a plurality of" means two or more, unless explicitly stated otherwise.

The technical solutions of the embodiments of this application are described in detail below with reference to the accompanying drawings.

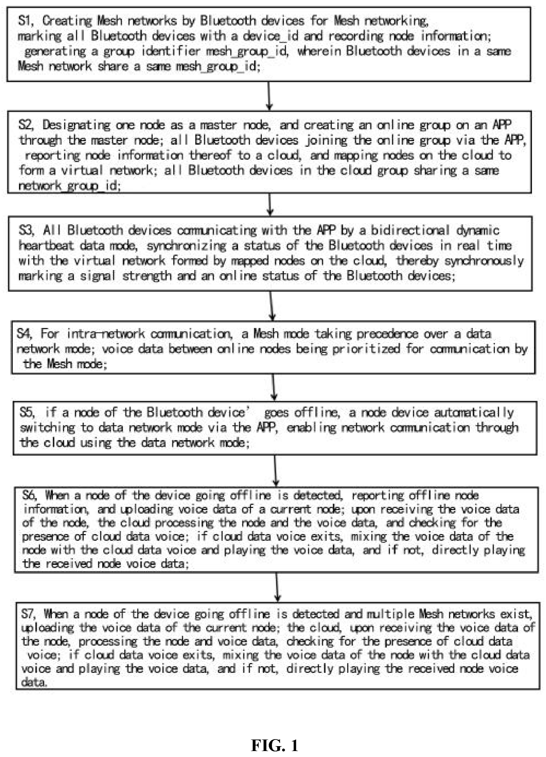

Referring to FIGS. 1 to 8, this application provides an automatic switching method for Mesh intercom and 5G data network intercom, including:
S1: Bluetooth devices create a Mesh network and perform Mesh networking, where the Mesh networking assigns a device_id to all Bluetooth devices and marks node information; a group identifier mesh_group_id is generated, and Bluetooth devices in the same Mesh network share the same mesh_group_id.
S2: one of the nodes serves as the master node, and the master node creates an online group via the APP; all Bluetooth devices join the online group through the APP, report their node information to the cloud, and map nodes on the cloud to form a virtual networking; all Bluetooth devices in the cloud group share the same network_group_id.

In S2, it further includes S21 and S22. In S21: all Bluetooth devices in the virtual networking belong to the same network_group_id. In S22: the same Mesh nodes are assigned the same mesh_group_id on the cloud, where network_group_id serves as the parent of mesh_group_id on the cloud. Devices with the same network_group_id communicate via the cloud in data network mode.

S3: all Bluetooth devices communicate with the APP by a bidirectional dynamic heartbeat data mode, synchronizing their status in real time with the virtual networking formed by the mapped nodes on the cloud, thereby achieving synchronized marking of the Bluetooth devices' signal strength and online status. That is, all devices communicate with the APP via Bluetooth, continuously reporting their current Mesh online status and surrounding Mesh node of the device conditions to the cloud in heartbeat data mode. Upon receiving the data, the cloud processes it and disseminates the status information of other devices in the same Mesh network using the same heartbeat data mode, ensuring synchronization of online and offline device statuses.

In S3, it further includes the following steps:
S31, after connecting via the APP, the Bluetooth device continuously sends its collected data, such as current Mesh networking status, device information, communication status, and surrounding node conditions, to the cloud in heartbeat data mode, where the cloud processes the basic device status information;
S32, upon receiving the data, if the cloud detects that a device has gone offline in the Mesh network, it sends the offline device's node information to all devices within the same network_group_id; at this point, all online devices must simultaneously send Mesh voice data packets when transmitting voice information, which are forwarded to the offline device via the cloud;
S33, in the presence of offline nodes, if multiple nodes send voice data simultaneously, the cloud mixes the voice data and distributes the mixed voice data to offline devices within the same network_group_id;
S34, in the presence of offline nodes, all Mesh online devices simultaneously receive Mesh device voice data and cloud voice data, which are mixed and played back via the APP;
S35, when a Mesh node goes offline and its cloud heartbeat data is also offline, the node is determined to be in a disengagement status; for disengaged nodes, the cloud heartbeat data mode is used to notify other online nodes; disengaged nodes are treated as non-existent, and voice data is not sent to them; and
S36, when an offline Mesh reconnects, the cloud heartbeat data automatically re-establishes the connection, determining the node as online.
S4, in network communication, Mesh mode takes precedence over data network mode. Voice data between online nodes is prioritized for transmission by a Mesh mode.

In S4, S41, within the same mesh_group_id network, if voice data does not include offline device voice, the device only plays Mesh voice data. S42, within the same mesh_group_id network, Mesh online nodes transmit data via the Mesh network and if offline devices exist, the node sending voice data also transmits it via the APP. S43, within the same network_group_id, data between different mesh_group _id networks is sent and received via the cloud network. Thus, all Mesh nodes in different subnetworks sending voice data must follow the S42 step.

S5, when a Bluetooth device's node goes offline, the node device automatically switches to data network mode via the APP, using the cloud for network communication. That is, when the device detects Mesh offline, the node device automatically switches to data network via the APP and communicates through the cloud.

S6, when a node of the device is detected as offline, the Bluetooth device reports offline node information and uploads the current node's voice data; the cloud processes the node and voice data, checks for cloud data voice, and if present, mixes the node voice data with cloud data voice before playback; if no cloud data voice exists, it directly plays the received node voice data.

S7, when a node of the device is detected as offline and multiple Mesh networks exist, the current node's voice data is uploaded; the cloud processes the node and voice data, checks for cloud data voice, and if present, mixes the node voice data with cloud data voice before playback; if no cloud data voice exists, it directly plays the received node voice data.

Via the APP, data nodes are marked with priority levels, where the master node has higher authority than regular nodes and holds the highest operational privileges in the network, allowing it to manage data communication for all Mesh nodes. Specific operations include the master node setting whether to allow adding external device users and designating devices to listen-only mode, i.e., only receiving voice data without sending.

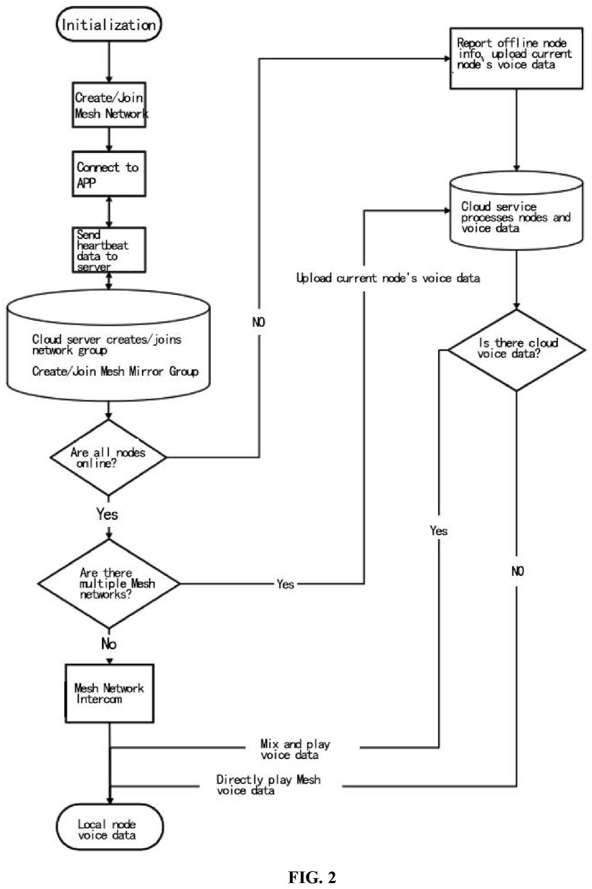

FIG. 2 is a schematic diagram of the voice processing flow for a single node in Mesh intercom. Refer to FIG. 2:
Create/join a Mesh network: devices create or join a Mesh network, forming a mesh_group_id, enabling them to become Bluetooth intercom-capable devices; each device is assigned a device _id and node identifier, ensuring unique node and device names.
Connect the APP: the Bluetooth device with the Mesh network is connected to the dedicated Bluetooth APP, enabling data transmission and communication between the Bluetooth device and the APP; the Bluetooth device can send the data it collects to the APP, which processes the data upon receipt.
Heartbeat data server transmission: both between the Bluetooth device and the APP, and between the APP and the cloud, data is transmitted via a bidirectional heartbeat data mode. The Bluetooth device communicates with the APP for data exchange and real-time information synchronization, while the APP communicates with the cloud for data exchange and real-time information synchronization, ensuring data synchronization across the device-APP-cloud system.
Create/join a network group on the cloud, and create/join a Mesh mirror group: create or join a network group on the cloud to form a network_group_id; create or join the cloud-mapped virtual networking.
Check if all nodes are online: after the Bluetooth device's network is set up, monitoring begins to track the status of all nodes; if all nodes are functioning normally and online, determine whether multiple Mesh networks exist; if there is only one Mesh network, direct Mesh network intercom can proceed, generating local node voice data.

If an offline node is detected, the device will report the node information of the offline node and upload its voice data. Upon receiving the node information and voice data, the cloud processes them and checks for the presence of cloud data voice. If cloud data voice exists, the node voice data is mixed with the cloud data voice, and the mixed voice data is played to form the local node voice data. If no cloud data voice exists, the Mesh voice data is played directly to form the local node voice data.

When all nodes are online but multiple Mesh networks exist, the device must upload the current node voice data to the cloud. After receiving the node information and voice data, the cloud processes them and checks for the presence of cloud data voice. If cloud data voice exists, the node voice data is mixed with the cloud data voice, and the mixed voice data is played. If no cloud data voice exists, the Mesh voice data is played directly to form the local node voice data.

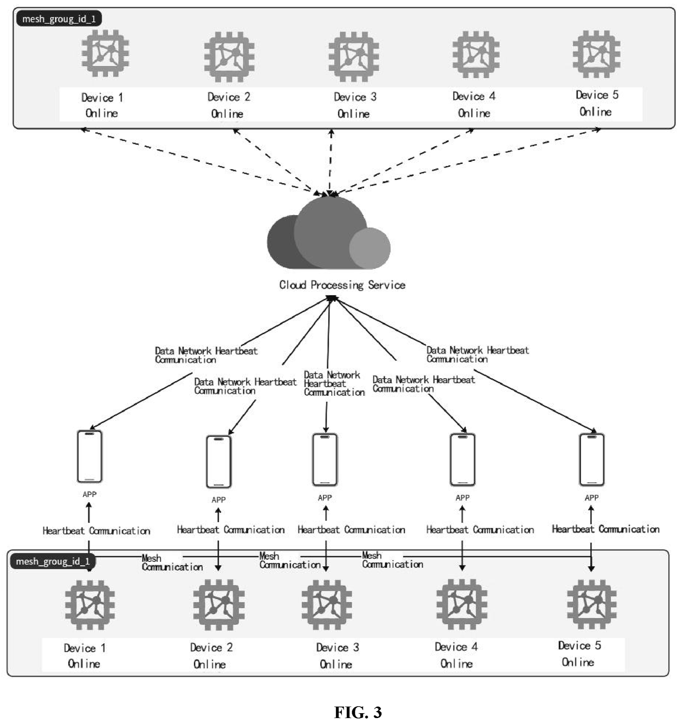

FIG. 3 illustrates an application example of full internal communication within a Mesh network where all devices are online. After a Bluetooth device creates or joins a Mesh network, the device is identified, and multiple Bluetooth devices form a Mesh network. As shown in the figure, devices device_1, device_2, device_3, device_4, and device_5 form the Mesh network mesh_group_id_1. Within the same Mesh network mesh_group_id_1, devices device_1, device_2, device_3, device_4, and device_5 communicate using Mesh mode. Each of these devices is connected to an APP, and bidirectional heartbeat data mode is used for communication between the devices and the APP. The APP communicates with the cloud via bidirectional heartbeat data mode in data network mode, and multiple APPs join the same cloud. Additionally, nodes are mapped on the cloud to form virtual networking, meaning devices device_1, device_2, device_3, device_4, and device_5, along with Mesh network mesh_group_id_1, are mapped onto the cloud to create virtual networking.

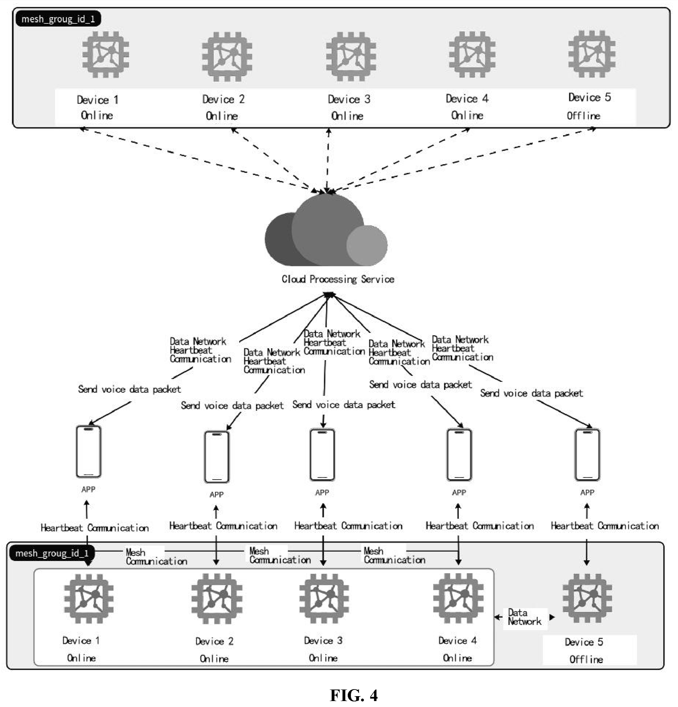

FIG. 4 demonstrates an example of communication methods among devices in the same Mesh network when some devices are offline. After a Bluetooth device creates or joins a Mesh network, the device is identified, and multiple Bluetooth devices form a Mesh network. As shown in the figure, devices device_1, device_2, device_3, device_4, and device_5 form the Mesh network mesh_group_id_1. However, device_5 in Mesh network mesh_group_id_1 is offline. Within Mesh network mesh_group_id_1, all online devices, including device_1, device_2, device_3, and device_4, communicate using Mesh mode. The offline device_5 communicates with mesh_group_id_1 and its online devices (device_1, device_2, device_3, and device_4) using data network mode. Online devices device_1, device_2, device_3, and device_4 also communicate with the APP via bidirectional heartbeat data mode, while the APP communicates with the cloud using bidirectional heartbeat data mode in data network mode, with multiple APPs joining the same cloud. Similarly, the offline device_5 communicates with the APP via bidirectional heartbeat data mode, and the APP communicates with the cloud using bidirectional heartbeat data mode in data network mode. The virtual networking reflects a consistent state: devices device_1, device_2, device_3, and device_4 are online, device_5 is offline, and device statuses and information are synchronized.

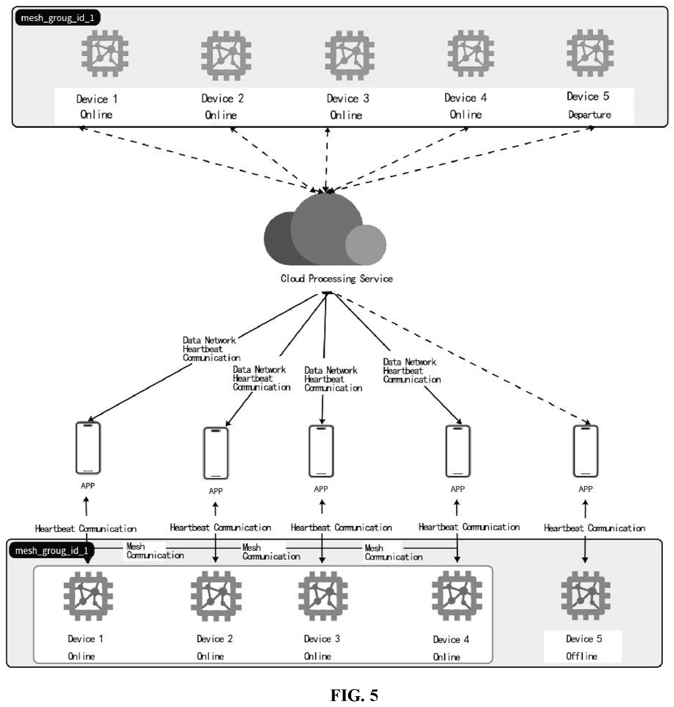

FIG. 5 illustrates the communication methods between devices in the same Mesh network when some devices leave the group. After a Bluetooth device creates or joins a Mesh network, it identifies the device, and multiple Bluetooth devices form a Mesh network. As shown in the figure, devices device_1, device_2, device_3, device_4, and device_5 form the Mesh network mesh_group_id_1. However, device_5 in Mesh network mesh_group_id_1 goes offline. Within Mesh network mesh_group_id_1, all online devices, including device_1, device_2, device_3, and device_4, communicate using Mesh mode. The online devices device_1, device_2, device_3, and device_4 also communicate with the APP using a bidirectional heartbeat data mode, while the APP communicates with the cloud via the same bidirectional heartbeat data mode over a data network, with multiple APPs joining the same cloud. The offline device_5 also communicates with the APP using the bidirectional heartbeat data mode, but the APP cannot communicate with the cloud. In this scenario, device_5 is determined to have left the group. The virtual networking reflects the same situation: devices device_1, device_2, device_3, and device_4 are online, while device_5 has left the group, and the device status and information are synchronized. Other online devices and the cloud no longer send messages to the offline device.

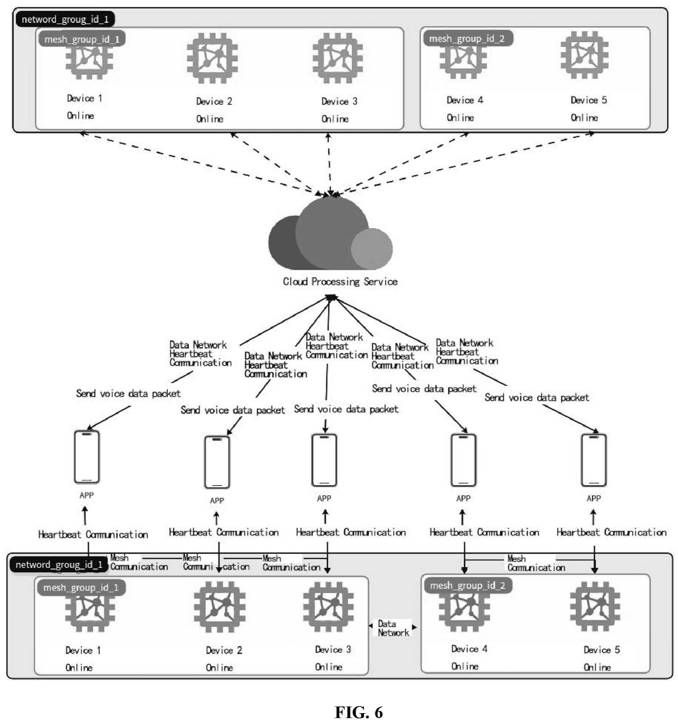

FIG. 6 demonstrates the communication methods among all devices in different Mesh networks when all are online. After a Bluetooth device creates or joins a Mesh network, it identifies the device, and multiple Bluetooth devices form a Mesh network. As shown in the figure, devices device_1, device_2, and device_3 form Mesh network mesh_group_id_1, while devices device_4 and device_5 form Mesh network mesh_group_id_2. Within mesh_group_id_1, devices device_1, device_2, and device_3 communicate using Mesh mode, and within mesh_group_id_2, devices device_4 and device_5 also communicate using Mesh mode. Both mesh_group_id_1 and mesh_group_id_2 are within the same network_group_id_1 and communicate with each other over a data network. Devices device_1, device_2, device_3, device_4, and device_5 also communicate with the APP using a bidirectional heartbeat data mode, while the APP communicates with the cloud via the same bidirectional heartbeat data mode over a data network, with multiple APPs joining the same cloud. However, the APP must simultaneously send voice data packets to the cloud. The virtual networking reflects the same scenario: devices device_1, device_2, and device_3 form Mesh network mesh_group_id_1, while devices device_4 and device_5 form Mesh network mesh_group_id_2. The device status and information are synchronized.

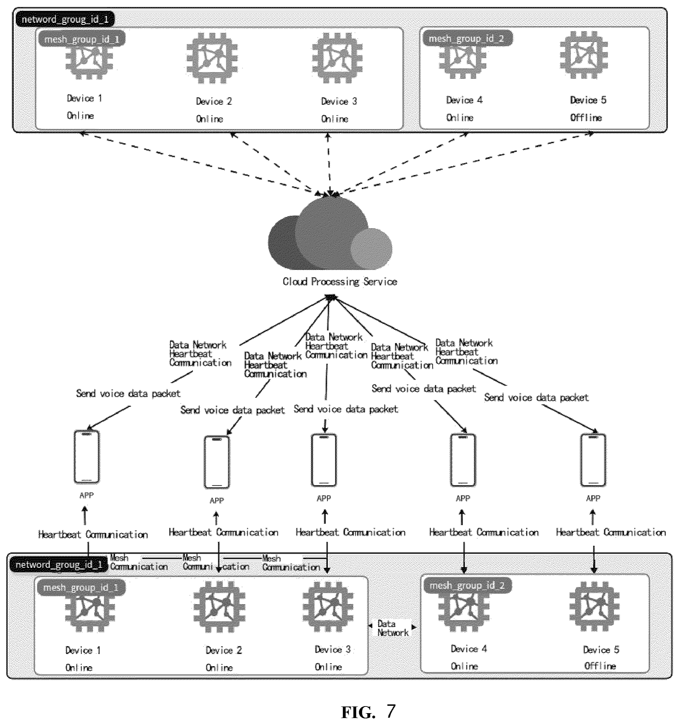

FIG. 7 illustrates an example of communication methods for all devices in different Mesh networks when some devices are offline. After a Bluetooth device creates or joins a Mesh network, it identifies the device, and multiple Bluetooth devices form a Mesh network. As shown in the figure, device_1, device_2, and device_3 form Mesh network mesh_group_id_1, while device_4 and device _5 form Mesh network mesh_group_id_2. All devices in mesh_group_id_1-device_1, device_2, and device _3-are online and communicate with each other using Mesh mode. In Mesh network mesh_group_id_2, device_4 is online, but device_5 is offline, preventing communication between device_4 and device_5. Both mesh_group_id_1 and mesh_group_id_2 are within the same network_group_id_1 and communicate with each other via data networks. Devices device_1, device_2, device_3, device_4, and device_5 also communicate with the APP using a bidirectional heartbeat data mode, while the APP communicates with the cloud via the same bidirectional heartbeat data mode over a data network. Multiple APPs join the same cloud, but each APP must simultaneously send voice data packets to the cloud. The virtual networking reflects a consistent scenario: device_1, device_2, and device_3 form Mesh network mesh_group_id_1, while device_4 and device_5 form Mesh network mesh_group_id_2, with device_5 in mesh_group_id_2 being offline. Both mesh_group_id_1 and mesh_group_id_2 are within network_group_id_1, and device statuses and information are synchronized.

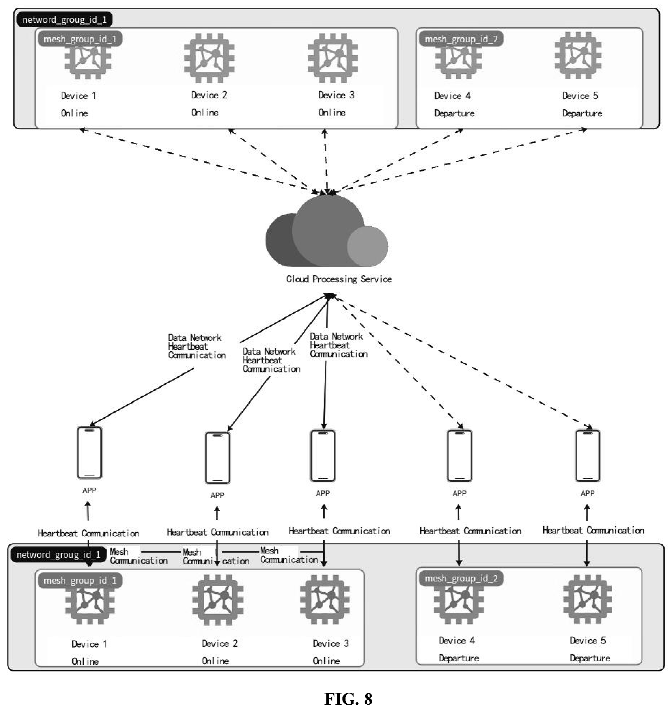

FIG. 8 demonstrates an example of communication methods for all devices in different Mesh networks when some devices leave the group. After a Bluetooth device creates or joins a Mesh network, it identifies the device, and multiple Bluetooth devices form a Mesh network. As shown in the figure, device_1, device_2, and device_3 form Mesh network mesh_group_id_1, while device_4 and device_5 form Mesh network mesh_group_id_2. All devices in mesh_group_id_1, including device_1, device_2, and device_3, are online and communicate with each other using Mesh mode. In Mesh network mesh_group_id_2, both device_4 and device_5 are offline, rendering the entire mesh_group_id_2 offline. Devices device_4 and device_5 can still communicate with the APP via bidirectional heartbeat data mode, but the heartbeat data between the APP and the cloud is offline. In this case, devices device_4 and device_5 are considered to have left the group.

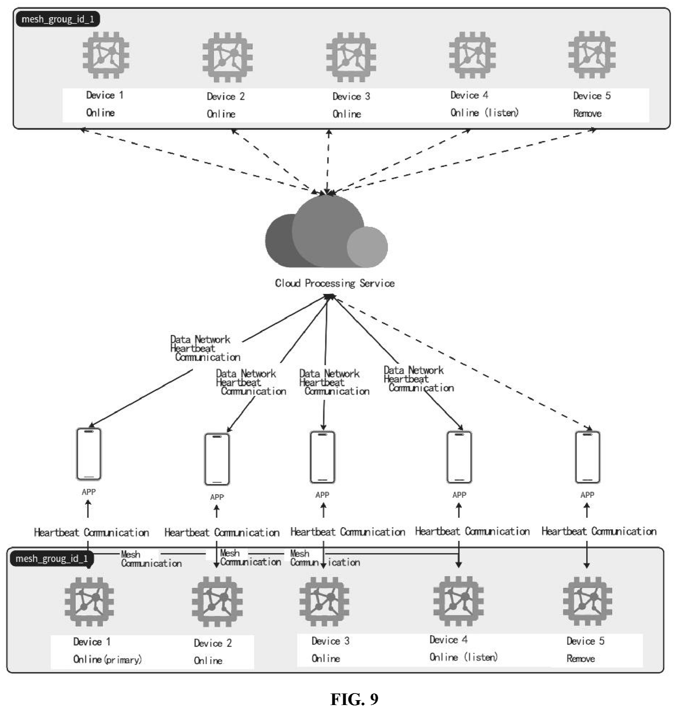

FIG. 9 illustrates full internal communication within the same Mesh network when all devices are online. After Bluetooth devices create or join a Mesh network, they are identified, and multiple Bluetooth devices form a Mesh network. As shown in the figure, devices device_1, device_2, device_3, device_4, and device_5 form the Mesh network mesh_group_id_1. Device_1 serves as the master node, device_4 as the listening node, and device_5 as the excluded node. Devices device_1, device_2, and device_3 are online and communicate by a Mesh mode, while device_4, as the listening node, does not engage in data interaction, and device_5, as the excluded node, also does not participate in data interaction. Devices device_1, device_2, device_3, device_4, and device_5 communicate with the APP using a bidirectional heartbeat data mode, while the APP communicates with the cloud via the same mode over a data network. Multiple APPs join the same cloud, but the APP of the excluded device_5 cannot communicate with the cloud. This model ensures controllable communication for non-essential nodes and reduces unnecessary clutter in communication, such as when active nodes transmit voice data, causing other receiving nodes to struggle in discerning critical information.

### Embodiment of the present application

This automatic switching method for Mesh intercom and 5G data network intercom monitors device online status in real-time. When a device/node goes offline, it automatically switches to cloud-based transmission of voice data to ensure normal transmission and reception for disconnected nodes, maintaining real-time and coherent integrity of voice data. Online nodes continue to use the Mesh network for voice data transmission, treating the cloud network as a backup channel for disconnected nodes, which is activated as needed to guarantee stability and integrity of voice data transmission. By uploading device information and voice data to the cloud via the APP, the cloud forwards voice data for each node based on Mesh network disconnection status, ensuring normal transmission during disconnection and achieving uninterrupted real-time voice data transmission across all nodes.

The embodiments of this application have been described above. The description is exemplary, not exhaustive, and not limited to the disclosed embodiments. Many modifications and variations will be apparent to those skilled in the art without departing from the scope and spirit of the described embodiments. The terminology used herein is chosen to best explain the principles, practical applications, or market-driven improvements of the embodiments or to enable other ordinary technicians in the field to understand the disclosed embodiments.

## Claims

1. An automatic switching method between Mesh intercom and 5G data network intercom, **characterized in that**, comprising the following steps:
S1: creating Mesh networks by Bluetooth devices for Mesh networking, marking all Bluetooth devices with a device_id and recording node information; generating a group identifier mesh_group_id, wherein Bluetooth devices in a same Mesh network share a same mesh_group_id;
S2: designating one node as a master node, and creating an online group on an APP through the master node; all Bluetooth devices joining the online group via the APP, reporting node information thereof to a cloud, and mapping nodes on the cloud to form a virtual network; all Bluetooth devices in the cloud group sharing a same network_group_id;
S3: all Bluetooth devices communicating with the APP by a bidirectional dynamic heartbeat data mode, synchronizing a status of the Bluetooth devices in real time with the virtual network formed by mapped nodes on the cloud, thereby synchronously marking a signal strength and an online status of the Bluetooth devices;
S4: for intra-network communication, a Mesh mode taking precedence over a data network mode; voice data between online nodes being prioritized for communication by the Mesh mode;
S5: if a node of the Bluetooth device' goes offline, a node device automatically switching to data network mode via the APP, enabling network communication through the cloud using the data network mode;
S6: when a node of the device going offline is detected, reporting offline node information, and uploading voice data of a current node; upon receiving the voice data of the node, the cloud processing the node and the voice data, and checking for the presence of cloud data voice; if cloud data voice exits, mixing the voice data of the node with the cloud data voice and playing the voice data, and if not, directly playing the received node voice data; and
S7: when a node of the device going offline is detected and multiple Mesh networks exist, uploading the voice data of the current node; the cloud, upon receiving the voice data of the node, processing the node and voice data, checking for the presence of cloud data voice; if cloud data voice exits, mixing the voice data of the node with the cloud data voice and playing the voice data, and if not, directly playing the received node voice data.

2. The automatic switching method for Mesh intercom and 5G data network intercom according to claim 1, **characterized in that**, in S2, all Bluetooth devices in the virtual networking are within the same network_group_id, and the same Mesh nodes are assigned with the same mesh_group_id in the cloud, wherein network_group_id serves as a parent of the mesh_group_id in the cloud, and devices under the same network_group_id communicate via the cloud in the data network mode.

3. The automatic switching method for Mesh intercom and 5G data network intercom according to claim 1, **characterized in that**, in S3, after the cloud receives data information, if it is detected that a device is offline from the Mesh, the cloud will send the offline device to all devices within the same network_group_id, and at this time, when any device sends voice information, the device must simultaneously transmit a Mesh voice data packet and send the Mesh voice data packet to the cloud via the APP, and the cloud then forwards the Mesh voice data packet to the offline device.

4. The automatic switching method for Mesh intercom and 5G data network intercom according to claim 3, **characterized in that**, in the presence of offline nodes, if multiple nodes send voice simultaneously, the cloud mixes the voice data and distributes the mixed voice data to offline devices within the same network_group_id.

5. The automatic switching method for Mesh intercom and 5G data network intercom according to claim 4, **characterized in that**, in the presence of offline nodes, all online Mesh devices simultaneously receive both Mesh device voice data and cloud voice data, and the Mesh device voice data and the cloud voice data are mixed and played by the APP.

6. The automatic switching method for Mesh intercom and 5G data network intercom according to claim 5, **characterized in that**, when a Mesh node goes offline and remote heartbeat data thereof is also offline, the node is determined to be in a disengagement status.; for disengaged nodes, the cloud heartbeat data mode is used to notify other online nodes; and disengaged nodes are treated as non-existent, and the voice data is not sent to the disengaged nodes.

7. The automatic switching method for Mesh intercom and 5G data network intercom according to claim 6, **characterized in that**, offline Mesh reconnection triggers automatic reconnection of cloud heartbeat data, confirming the node as online.

8. The automatic switching method for Mesh intercom and 5G data network intercom according to claim 1, **characterized in that**, in S4, S41, within the same mesh_group_id network, if voice data does not comprise offline device voice, the device only plays Mesh voice data; in S42, within the same mesh_group_id network, data is transmitted between online Mesh nodes via the Mesh network; if offline devices exist, the node sending voice data also transmits the voice data via the APP; in S43, within the same network_group_id, data with different mesh_group_id is sent and received in a form of a cloud network.

9. The automatic switching method for Mesh intercom and 5G data network intercom according to claim 1, **characterized in that**, the APP assigns priority levels to data nodes, where the master node has a higher priority than ordinary nodes and holds a highest operational authority over the network, allowing the master node to manage data communication for all Mesh nodes.

10. The automatic switching method for Mesh intercom and 5G data network intercom according to claim 9, **characterized in that**, the master node sets whether to allow the addition of external device users; a designated device is set to a listening mode, meaning the designated device is only allowed to receive voice data but cannot send voice data.
